# EUROPÄISCHE PATENTSCHRIFT

(11) **EP 0 733 158 B1**
(45) Veröffentlichungstag und Bekanntmachung des Hinweises auf die Patenterteilung: **13.05.1998**
(21) Anmeldenummer: 95902131.2
(22) Anmeldetag: 06.12.1994
(51) Int. Cl.: F02B 31/00, F02B 25/04

(54) **GESTEUERTE ZWEITAKT-BRENNKRAFTMASCHINE**
CONTROLLED TWO-STROKE INTERNAL COMBUSTION ENGINE
MOTEUR COMMANDE A COMBUSTION INTERNE A DEUX TEMPS

(30) Priorität: 08.12.1993 DE 4341885
(43) Veröffentlichungstag der Anmeldung: 25.09.1996
(60) Teilanmeldung: 97117973.4
(73) Patentinhaber: König, Kurt, 86946 Vilgertshofen-Issing (DE)
(72) Erfinder: König, Kurt, 86946 Vilgertshofen-Issing (DE)
(74) Vertreter: Fritsche, Rainer, Dipl.-Wirtsch.-Ing.
(86) Internationale Anmeldenummer: EP9404061
(87) Internationale Veröffentlichungsnummer: WO9516113

(56) Entgegenhaltungen:
- EP-A- 0 554 235
- WO-A-86/06789
- WO-A-91/00684
- US-A- 4 693 215

## Beschreibung

Die Erfindung betrifft eine Zweitakt-Brennkraftmaschine gemäß dem Oberbegriff des Anspruchs 1 sowie ein Verfahren zum Betreiben einer Zweitakt-Brennkraftmaschine gemäß dem Oberbegriff des Anspruchs 4.

Aus der WO-A-91/00684 geht eine Zweitakt-Brennkraftmaschine sowie ein Verfahren zum Betreiben einer Zweitakt-Brennkraftmaschine der eingangs genannten Art hervor. Die Brennkraftmaschine weist zwei tangential in den Brennraum mündende Einlaßkanäle auf, welche jeweils mit einem Einspritzventil versehen sind. Die Öffnung des Ausgangskanals erfolgt über den sich hin- und herbewegenden Kolben. Für die Abführung der Abgase ist daher nur ein symmetrisches Steuerdiagramm möglich, was zu einem erhöhten Treibstoffverbrauch sowie zu einer verhältnismäßig hohen Schadstoffemission führt.

Die Verwendung von gesteuerten Auslaßventilen bei einer Zweitakt-Brennkraftmaschine geht aus der WO-A-86/06789 hervor.

Aus der DE-PS 583 885 geht eine Zweitakt-Brennkraftmaschine sowie ein Verfahren zum Betreiben dieser hervor, bei der sowohl ein Einlaßkanal für Luft als auch ein Einlaßkanal für ein Treibstoff-Luftgemisch in einem Brennraum eines Zylinders mündet. Ein Auslaßkanal für die Abgase öffnet sich in der Weise an der Zylinderwand, daß diese bekannte Zweitakt-Brennkraftmaschine im Wege des Gleichstromspülens gespült werden kann. Das Freigeben und Schließen sowohl des Einlaßkanals für die Spül- bzw. Frischluft als auch des Einlaßkanals für das Treibstoff-Luftgemisch erfolgt über nicht steuerbare Ventile, wogegen der Auslaßkanal über den sich hin- und herbewegenden Kolben freigegeben bzw. verschlössen wird. Das Öffnen der Ventile erfolgt durch die Überwindung der Federkraft der jeweiligen Ventilfeder mittels des in den Brennraum eingeführten Mediums. Mit dieser bekannten Zweitakt-Brennkraftmaschine läßt sich für die Zuführung des frischen Gemisches aufgrund einer nicht näher beschriebenen Steuerung des Gebläses für die Frischluft und die Dimensionierung der Ventile ein unsymmetrisches Steuerdiagramm erzielen. Dagegen kann für die Abführung der Abgase nur ein symmetrisches Steuerdiagramm vorgesehen werden, was zu einem erhöhten Treibstoffverbrauch sowie zu einer verhältnismäßig hohen Schadstoffemision führt.

Aus der DE-PS 410 695 geht weiterhin eine Zweitakt-Brennkraftmaschine hervor, bei der in einem Einlaßkanal für spülluft ein drucköl-betriebener Schieber angeordnet ist. Ob und in welcher Weise der Schieber gesteuert wird, ist aus der DE-PS 410 695 nicht entnehmbar. Der Auslaßkanal ist ebenfalls im Verhältnis zum Einlaßkanal so angeordet, daß diese bekannte Zweitakt-Brennkraftmaschine im Wege des Gleichstromspülens gespült werden kann. Das Freigeben und Schließen des Auslaßkanals erfolgt über den hin- und hergehenden Kolben. Zu bemerken ist noch, daß diese bekannte Zweitakt-Brennkraftmaschine mittels Dieselkraftstoff betrieben wird, wozu eine Einspritzdüse, die innerhalb des Drehschiebers angeordnet ist, Dieselkraftstoff in den Brennraum zu einem gegebenen Zeitpunkt einspritzt.

Schließlich geht aus der DE 40 12 474 Al eine Zweitakt-Brennkraftmaschine hervor, bei der sowohl der Einlaßkanal als auch der Auslaßkanal mit je einem Ventil freigebbar bzw. verschließbar ist. Die Spülung erfolgt hierbei durch das Querstromspülverfahren, welches gegenüber dem Gleichstromspülverfahren den Nachteil aufweist, daß Auspuffgase trotz Zuführung von Spülluft bzw. frischem Gemisch in dem Zylinder verbleiben können. Da außerdem der Auslaßkanal im Bereich des Brennraumes in den Zylinder mündet, treten hierbei thermische Probleme auf.

Es ist Aufgabe der vorliegender Erfindung, eine Zweitakt-Brennkraftmaschine und ein Verfahren zum Betreiben einer Zweitakt-Brennkraftmaschine der eingangs genannten Art zu schaffen, die bzw. das bei einem höherem Wirkungsgrad einen verringerten Brennstoffverbrauch und eine geringere Schadstoffemission ermöglicht.

Die vorstehende Aufgabe wird bei einer Zweitakt-Brennkraftmaschine durch die Merkmale des Anspruchs 1 gelöst. Hierbei bedeutet steuerbares Regelelement, daß der Öffnungs- bzw. Schließzeitpunkt, die Öffnungs- bzw. Schließzeit und/oder die Öffnungs- bzw. Schließgeschwindigkeit in Abhängigkeit eines oder mehrerer Betriebsparameter der Brennkraftmaschine, insbesondere der Drehwinkelstellung der Kurbelwelle gesteuert werden kann. Die vorgeschlagene Lösung ermöglicht, daß sowohl für den Einlaßbereich als auch den Auslaßbereich ein unsymmetrisches Steuerdiagramm vorgesehen werden kann, was wiederum einen besonders günstigen Treibstoffverbrauch und eine Reduzierung der Schadstoffemission ermöglicht. Gleichzeitig wird durch die Anwendung des Gleichstromspülverfahrens eine besonders schnelle und gründliche Reinigung des Brennraumes bzw. Zylinders von den Abgasen erzielt. Darüber hinaus ermöglicht der durch das steuerbare Regelelement freigebbare bzw. verschließbare Auslaß eine Möglichkeit für den Motorkonstrukteur, den Ort des Auslaßkanals in der Zylinderwand frei zu bestimmen. So kann hierdurch beispielsweise der Auslaßkanal näher zu dem Brennraum verschoben werden, so daß eine höhere Ausströmgeschwindigkeit für die Abgase erzielt und der Brennraum bzw. Zylinder schneller von den Abgasen entleert werden kann. Gleichzeitig, oder alternativ hierzu, kann der Auslaß durch das steuerbare Regelelement gegenüber einem ungesteuerten Auslaß früher geöffnet werden, so daß die Abgase insgesamt kühler sind, wodurch gegebenenfalls ein auftretendes thermisches Problem vermieden wird.

Zu bemerken ist noch, daß der Antrieb der steuerbaren Regelelemente beispielsweise über eine oder mehrere Nockenwellen erfolgen kann. Sind diese Nrockenwellen elektrohydraulisch verstellbar, so kann nicht nur ein unsymmetrisches Steuerdiagramm erzielt werden, sondern auch eine Verschiebung der gesamten Öffnungszeit sowohl des Einlaß- als auch des Auslaßventils.

Für die Ventile selbst können die verschiedensten Elemente, wie beispielsweise Tellerventile mit in den Zylinder öffnenden Ventilelementen, Drehschieber oder dergleichen verwendet werden. Des weiteren ist noch anzumerken, daß das steuerbare Regelelement im Auslaßkanal nicht unmittelbar im Mündungsbereich des Auslaßkanals in den Zylinderraum angeordnet sein muß, sondern mit einem gewissen Abstand hierzu vorgesehen werden kann. Hierdurch lassen sich möglicherweise auftretende thermische Probleme für das Auslaßventil vermeiden, so daß der Materialeinsatz für das Auslaßventil reduziert wird. Bei entsprechender Abstimmung des Motors besteht dann die Möglichkeit, einen Nachladeeffekt bei der Zuführung des frischen Gemisches zu erzielen, da nach Schließen des Auslaßkanals mittels des steuerbaren Regelelements das frische Gemisch in den Auslaßkanal eindringt und von dem verschlossenen steuerbaren Regelelement zurück in den Brennraum geworfen wird, wo sich bereits weiteres frisches Gemisch angesammelt hat.

Wird der Einlaßkanal so angeordnet, daß er tangential in den Brennraum des Zylinders mündet, so tritt die Frischluft bzw. das frische Gemisch entlang der Zylinderwand kreisend in den Brennraum ein. Da die Zylinderwand durch eine entsprechende Kühlvorrichtung gekühlt wird, kühlen sich demgemäß die Frischgase ebenfalls ab, so daß die Füllung des Brennraumes verbessert und die Verdichtung ohne der Gefahr der Selbstzündung erhöht werden kann, was gleichzeitig eine höhere Leistung und eine Kraftstoffersparnis bedeutet.

In den Brennraum können sowohl zwei oder mehr Einlaßkanäle münden. Sind zwei Einlaßkanäle vorgesehene, so ist es besonders vorteilhaft, wenn diese beidseits bzw. symmetrisch zur Längsachse des Zylinders angeordnet sind, so daß bei einem Einsatz der Zweitakt-Brennkraftmaschine als Benzin verbrennende Brennkraftmaschine die Zündkerze in der Längsachse des Zylinders, d.h. also in der Mitte des Zylinders, angeordnet werden kann. Die mittige Anordnung der Zündkerze ist dabei von Vorteil, da sich die Flammfront gleichmäßig ausbreiten kann.

Die vorstehend genannte Aufgabe wird verfahrensgemäß durch die Merkmale des Anspruchs 4 gelöst. Dabei kann ebenfalls der Einlaßkanal ein steuerbares Regelelement aufweisen. Neben dem bereits bei Viertakt-Brennkraftmaschinen verwendeten Betriebsparameter "Drehzahl" lassen sich auch andere Betriebsparameter als Steuergrößen einsetzen.

Sind für die Zweitakt-Brennkraftmaschine wenigstens zwei Einlaßkanäle oder mehr vorgesehen, so kann in jedem Einlaßkanal ein Einspritzventil angeordnet werden. Hierdurch läßt sich eine sogenannte Schichtladung im Brennraum erzielen, d.h., daß die Zweitakt-Brennkraftmaschine sich derart betreiben läßt, daß für jeden Arbeitshub zunächst ein mageres Gemisch, insbesondere kurz vor Erreichen des unteren Totpunktes, in den Brennraum und anschließend ein fettes Gemisch gelangt. Eine derartige, in der Fachliteratur als Mager-Motor bezeichnete Betriebsweise hat eine hohe Kraftstoffersparnis zur Folge. Auch hierbei kann die Frischluft bzw. das frische Gemisch in den Zylinder kreisend eingeführt werden.

Wird das frische Gemisch mittels des sich vom unteren Totpunkt zum oberen Totpunkt bewegenden Kolbens, insbesondere kurz vor Erreichen des oberen Totpunktes, beschleunigt, so läßt sich eine hohe Verdichtung erzielen, ohne daß hierbei die Temperatur des frischen Gemisches zunächst stark ansteigt, d.h., zeitverzögert ansteigt. Dies hat wiederum eine Leistungssteigerung der Zweitakt-Brennkraftmaschine zur Folge.

Um für den Betrieb der Brennkraftmaschine nur soviel Frischgas bzw. Frischluft in den Zylinder gelangen zu lassen, wie für den jeweiligen Lastbereich (Leerlauf, Teillast usw.) benötigt wird, kann vorgesehen werden, daß die benötigte Frischgasmenge über einen variablen Spüldruck geregelt wird, der sich sich in Abhängigkeit der an der Brennkraftmaschine anliegenden Last einstellt. Dies kann zB. dadurch erreicht werden, daß in dem Frischgaskanal ein stromaufwärts des steuerbaren Regelelements angeordneter Sensor zur Druckerfassung vorgesehen ist, der mit einer elektronischen Regelung bzw. Steuerung für die Brennkraftmaschine verbunden ist. Stromaufwärts des steuerbaren Regelelementes kann in dem Frischgaskanal weiterhin ein Überdruckventil vorgesehen werden, daß durch die elektronische Steuerung gesteuert wird. In Abhängigkeit der an der Brennkraftmaschine anliegenden bzw. von dieser geforderten Last wird das Überdruckventil durch die elektronische Regelung geöffnet bzw. geschlossen. Hierdurch läßt sich eine quantitative Steuerung und Regelung der zugeführten Frischgasmenge erreichen. Diese quantitative Steuerung kann auch dadurch erfolgen, daß in dem Auslaßkanal eine antreibbare Drosselklappe vorgesehen ist, die stromabwärts des steuerbaren Regelelementes angeordnet ist. Diese Drosselklappe wird ebenfalls lastabhängig von einem Stellmotor oder einem sonstigen Antrieb betätigt, wobei auch hier eine elektronische Steuerung vorgesehen ist, die die lastabhängigen Daten in Antriebswerte für den Antrieb der Drosselklappe umsetzt. Hierdurch wird sichergestellt, daß nur soviel Abgase ins Freie gelangen, wie Frischgase benötigt werden.

In beiden Fällen bleiben Abgasreste im Zylinder, womit eine Abgasrückführung entfällt und somit die Verbrennung kühler abläuft, was den Schadstoffausstoß verringert. Es ist noch darauf hinzuweisen, daß die vorstehend beschriebenen Möglichkeiten auch miteinander kombiniert werden können.

Vorteilhafte Ausgestaltungen sowie ein Ausführungsbeispiel wird nachstehend anhand der Zeichnungen erläutert. Es zeigt:
- Figur 1: eine Ausführungsform der erfindungsgemäßen Brennkraftmaschine;
- Figur 2: einen schematischen Teillängsschnitt durch den Brennraum gemäß Figur 1 wobei die in Figur 1 gezeigten Einspritzventile nicht wiedergegeben sind;
- Figur 3: ein Steuerdiagramm für die erfindungsgemäße Brennkraftmaschine; und
- Figur 4: ein Arbeitsschema für einen Fünf-Zylinder-Zweitakt-Reihenmotor.

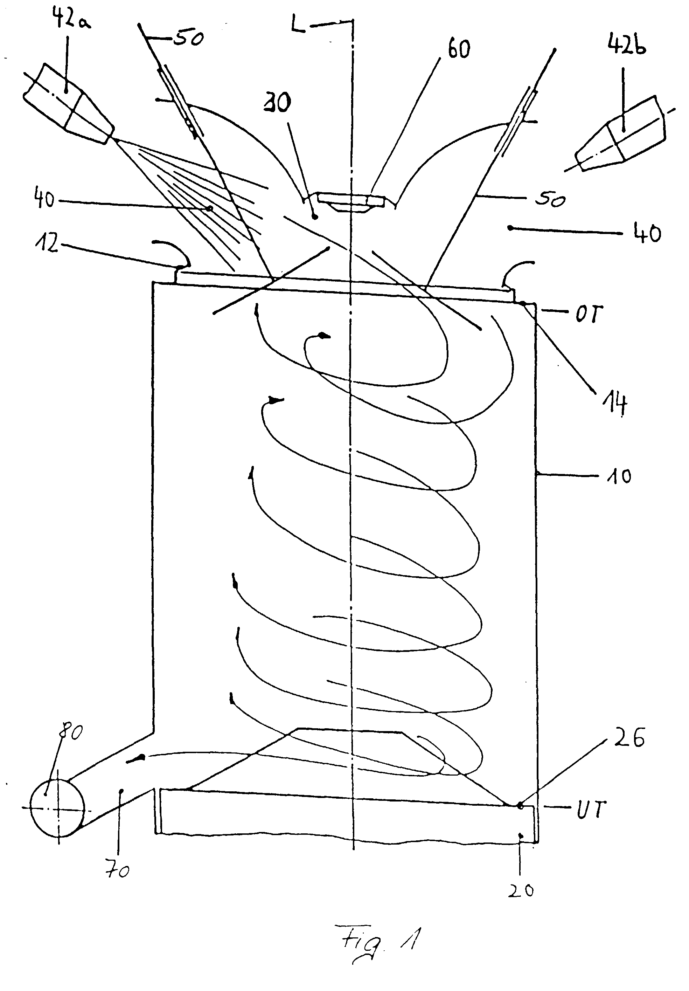

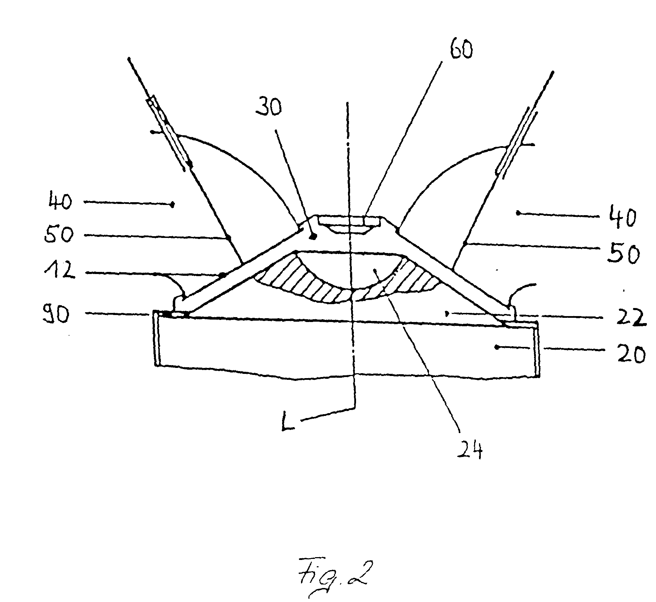

In Figur 1 ist mit 10 ein Zylinder und mit 20 ein Kolben bezeichnet, welcher sich von einem unteren Totpunkt (= UT) zu einem oberen Totpunkt (= OT) hin- und herbewegen kann. In den kegelstumpfartig ausgebildeten Brennraum 30 des Zylinderkopfes 12 münden beidseits einer Längsachse L des Zylinders 10 zwei Einlaßkanäle 40. Die einlaßkanäle 40 sind hierbei so angeordnet, daß das aus ihnen austretende frische Gemisch entlang der Zylinderwand kreisend in den Zylinder 10 eintreten kann, wie dies in Figur 1 durch entsprechende Pfeile dargestellt ist. Die beiden Einlaßkanäle 40 lassen sich mittels Einlaßventilen 50 freigeben bzw. verschließen. Die beiden Einlaßventile 50 sind dabei so ausgebildet, daß sie beim Öffnen des jeweiligen Einlaßkanals 40 in den Brennraum 30 hineinragen, wie dies in Figur 1 dargestellt ist. Die beiden Ventile 50 können in ihre Schließstellung mittels einer nicht weiter dargestellten Feder vorbelastet sein. Wie aus Figur 2 hervorgeht, ist im Zentrum des kegelstumpfartigen Brennraumes 30 eine Zündkerze 60 in der Weise angeordnet, daß sie in der Längsachse L des Zylinders 10 sitzt.

Bezogen auf Figur 1, ist unterhalb der Einlaßkanäle 40 der Auslaßkanal 70 vorgesehen, der über ein steuerbares Regelelement, wie beispielsweise ein Ventil 80 freigebbar und verschließbar ist. Wie aus Figur 1 hervorgeht, ist das Auslaßventil 80 mit einem gewissen Abstand zum Mündungsbereich des Auslaßkanals 70 in den Zylinder 10 angeordnet. Hierdurch läßt sich eine thermische Überbelastung des Auslaßventils 80 vermeiden. Wie ebenfalls aus Figur 1 hervorgeht, ist der Auslaßkanal 70 zu den beiden Einlaßkanälen 40 in der Weise angeordnet, daß die Spülung des Zylinders 10 im Wege des Gleichstromspülens erfolgt. Sowohl das Auslaßventil 80 als auch die beiden Einlaßventile 50 sind jeweils in Abhängigkeit eines Betriebsparameters der Brennkraftmaschine steuerbar.

Wie aus der Figur 2 hervorgeht, ist der Kolben 20 mit einem ein Gemisch- bzw. Frischluftleitelement bildenden kegelstumpfartigen Aufsatz 22 versehen, dessen Form im wesentlichen der kegelstumpfartigen Form des Brennraumes 30 angepaßt ist. Im Zentrum des kegelstumpfartigen Aufsatzes 22 ist eine vorzugsweise kalottenartige Vertiefung 24 vorgesehen, in die das zu zündende Gemisch bzw. die Frischluft gegenüber der Zündkerze 60 sammelbar ist. Weiterhin ist, wie dies ebenfalls aus der Figur 2 hervorgeht, zwischen einer ringförmigen Fläche 26 des Kolbens 20 und der dem Kolben 20 bei Erreichen am oberen Totpunkt gegenüberliegende Zylinderkopffläche 14 ein Quetschspalt 90 ausgebildet, der das an dieser Stelle während des Verdichtungsvorganges angesammelte Gemisch bzw. die Frischluft verdrängt und durch den kegelstumpfartigen Aufsatz 22 des Kolbens 20 in Richtung zur Zündkerze 60 beschleunigt.

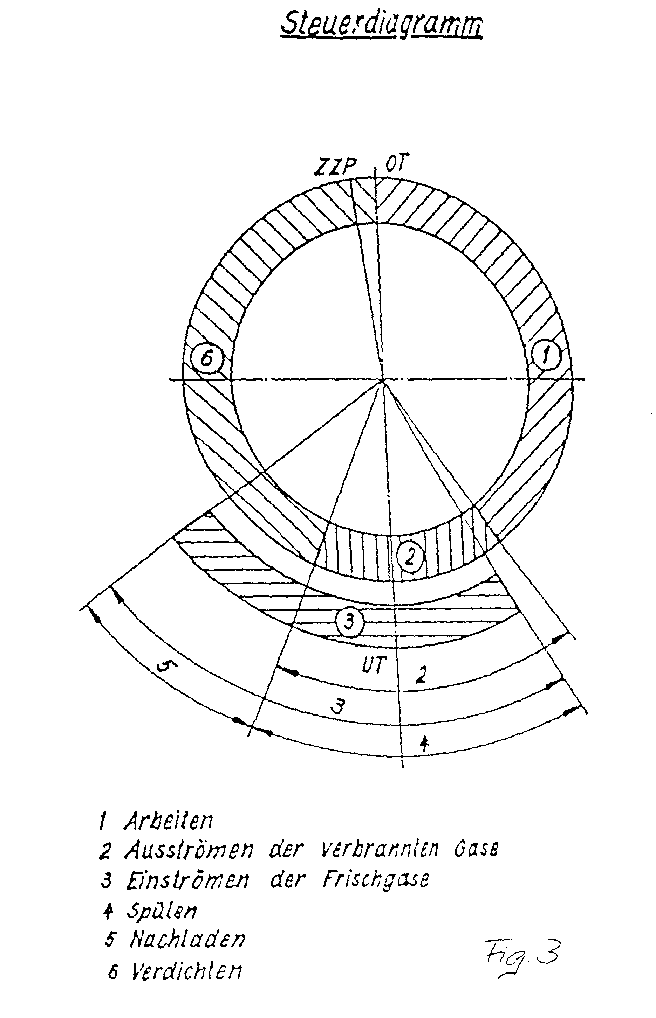

Da die beiden Einlaßkanäle 40 und der Auslaßkanal 70 über steuerbare Regelelemente 50, 80 in Abhängigkeit eines Betriebsparameters der Brennkraftmaschine gesteuert werden, kann ein unsymmetrisches Steuerdiagramm erzielt werden, wie dies aus Figur 3 hervorgeht.

Wie aus der Figur 1 hervorgeht, kann das frische Gemisch mittels eines Einspritzens von Kraftstoff in die durch die Einlaßkanäle 40 mittels eines nicht weiter dargestellten Gebläses zugeführte Frischluft erfolgen. Hierzu ist in jedem der Einlaßkanäle 40 ein Einspritzventil 42a bzw. 42b angeordnet. Anstelle von zwei Einlaßkanälen 40 mit je einem Einspritzventil 42a bzw. 42b kann auch ein einziger Einspritzeinlaßkanal 40 mit einem nicht dargestellten Stufeneinspritzventil vorgesehen werden. Ebenso besteht die Möglichkeit, in einem Einlaßkanal 40 zwei Einspritzventile 42a bzw. 42b vorzusehen.

Die Arbeitsweise der erfindungsgemäßen Brennkraftmaschine wird nachstehend erläutert:

Im ersten Takt arbeitet der Kolben 20, d.h., er bewegt sich vom oberen Totpunkt zum unteren Totpunkt. Vor Erreichen des unteren Totpunktes wird der Auslaßkanal 70 zum einen durch den Kolben 20 aber auch durch das steuerbare Regelelement 80 geöffnet. Kurz danach werden die Einlaßkanäle 40 durch die beiden Ventile 50 geöffnet. Das von einem Gebläse angetriebene frische Gemisch bzw. die frische Luft kann über die Einlaßkanäle 40 in den brennraum 30 gelangen, wobei das frische Gemisch bzw. die Frischluft kreisend entlang der Zylinderwand des Zylinders 10 strömt. Im zweiten Takt bewegt sich der Kolben 20 vom unteren Totpunkt zum oberen Totpunkt. Hierbei wird der Auslaßkanal 70 sowohl durch das Ventilelement 80 als auch durch den Kolben 20 geschlossen. Anschließend werden die Einlaßkanäle 40 ebenfalls durch die Ventile 50 geschlossen und das frische Gemisch bzw. die frische Luft verdichtet. Kurz vor dem oberen Totpunkt wird das frische Gemisch mittels der Zündkerze 60 entzündet. Zu bemerken ist, daß der Auslaßkanal 70 unabhängig von der Stellung des Kolbens 20 mittels des steuerbaren Regelelements 80 freigegeben bzw. geschlossen werden kann, d.h., daß der Auslaßkanal 70 bereits geschlossen bzw. freigegeben wird, bevor der Kolben 20 eine entsprechende Stellung im Zylinder 10 eingenommen hat.

Mit der erfindungsgemäßen Zweitakt-Brennkraftmaschine läßt sich auch eine sogenannte Ladungsschichtung bzw. Schichtladung vornehmen. Hierbei erfolgt die Zuführung des frischen Gemisches durch die zwei Einspritzventile 42a, 42b in den beiden Einlaßkanälen 40. Bewegt sich der Kolben 20 vom oberen Totpunkt zum unteren Totpunkt, so wird der Frischluft von dem ersten Einspritzventil 42a wenig Kraftstoff beigegeben, so daß ein mageres Gemisch entsteht. Im Nachladebereich, d.h., wenn sich der Kolben 20 vom unteren Totpunkt zum oberen Totpunkt bewegt, wird durch das zweite Einspritzventil 42b der einströmenden Luft viel Kraftstoff zugemischt, so daß ein fettes Gemisch entsteht. Durch den besonders gestalteten Kolben 20 sammelt sich das fette Gemisch im kalottenartig gestalteten Brennraum 24 des Kolbens 20, wo es von der zentral angeordneten Zündkerze gezündet wird.

Schließlich ist noch darauf hinzuweisen, daß der Antrieb der Steuerelemente bzw. Ventile für den Einlaß- und Auslaßkanal elektro-hydraulisch verstellt werden kann, womit die Steuerzeiten der jeweiligen Anforderung angepaßt werden.

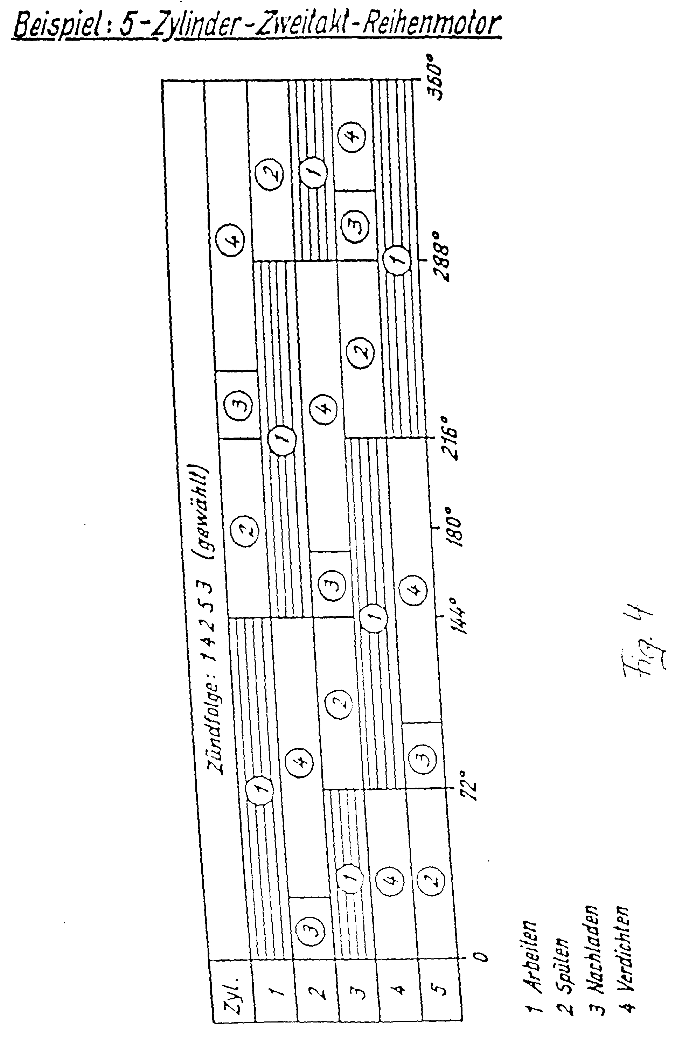

In Figur 4 ist ein Arbeitsschema für einen Fünfzylinder-Zweitakt-Reihenmotor dargestellt. Aus diesem Arbeitsschema zeigt sich unmittelbar, daß die erfindungsgemäße Brennkraftmaschine nicht nur einen hohen Wirkungsgrad, sondern auch einen ruhigen Lauf aufweist, da die Überdeckung der einzelnen Arbeitshübe verhältnismäßig groß ist.

## Patentansprüche

1. Zweitakt-Brennkraftmaschine, umfassend mindestens einen Zylinder (10) mit einem darin sich hin- und herbewegenden Kolben (20) sowie mit einem ersten und einem zweiten Einlaßkanal (40) und mit mindestens einem Auslaßkanal (70), wobei die Einlaßkanäle (40) im Verhältnis zu dem Auslaßkanal (70) gemäß dem Gleichstromspülverfahren in der Weise angeordnet sind, daß sie im Bereich des Brennraums (30) in den Zylinder (10) münden, und wobei im Mündungsbereich der Einlaßkanäle (40) je ein steuerbares Regelelement (50) und in jedem Einlaßkanal (40) ein Einspritzventil (42a, 42b) vorgesehen ist,
**dadurch gekennzeichnet**,
daß die Einlaßkanäle (40) tangential in den Brennraum (30) münden, und daß im Mündungsbereich des Auslaßkanals (70) ein ebenfalls steuerbares Regelelement (80) angeordnet ist, und daß mittels des ersten in dem ersten Einlaßkanal (40) angeordneten Einspritzventils (42a) ein nur wenig Kraftstoff beinhaltendes Gemisch in den Brennraum (30) gelangt, und mittels des zweiten in dem zweiten Einlaßkanal (40) angeordneten Einspritzventils (42b) ein fettes Gemisch in den Brennraum (30) gelangt.

2. Zweitakt-Brennkraftmaschine nach Anspruch 1,
**dadurch gekennzeichnet**,
daß die Einlaßkanäle (40) im Zylinderkopf (12) in den Brennraum (30) münden.

3. Zweitakt-Brennkraftmaschine nach Anspruch 1 oder 2,
**dadurch gekennzeichnet**,
daß die beiden Einlaßkanäle (40) symmetrisch zur Längsachse (L) des Zylinders (10) angeordnet sind.

4. Verfahren zum Betreiben einer gemischbildenden Brennkraftmaschine, wobei mindestens ein Zylinder mit einem darin sich hin- und herbewegenden Kolben sowie mit wenigstens zwei Einlaßkanäle, in denen jeweils ein Einspritzventil angeordnet ist, und mit mindestens einem Auslaßkanal vorgesehen ist, wobei weiter die Einlaßkanälen im Verhältnis zu dem Auslaßkanal gemäß dem Gleichstromspülverfahren in der Weise angeordnet sind, daß sie im Bereich des Brennraumes in den Zylinder münden, wobei im Mündungsbereich der Einlaßkanäle jeweils ein Regelelement vorgesehen ist,
**dadurch gekennzeichnet**,
daß das frische Gemisch in den Zylinder kreisend eingeführt wird, daß der Auslaßkanal in Abhängigkeit eines Betriebsparameters der Brennkraftmaschine, insbesondere der Drehwinkelstellung der Kurbelwelle gesteuert wird, daß bei der Bewegung des Kolbens vom oberen Totpunkt zum unteren Totpunkt mittels des ersten in dem ersten Einlaßkanal angeordneten Einspritzventils ein nur wenig Kraftstoff beinhaltendes Gemisch in den Brennraum gelangt, und daß bei der Bewegung des Kolbens vom unteren Totpunkt zum oberen Totpunkt mittels des zweiten, in einem zweiten Einlaßkanal angeordneten Einspritzventils ein fettes Gemisch in den Brennraum gelangt.

5. Verfahren nach Anspruch 4,
**dadurch gekennzeichnet,**
daß bei einem Arbeitshub des Kolbens während seiner Bewegung vom oberen Totpunkt zum unteren Totpunkt vor Erreichen des unteren Totpunktes das steuerbare Regelelement den Auslaßkanal öffnet, daß weiterhin kurz danach die Einlaßkanäle durch deren jeweiliges steuerbares Regelelement geöffnet werden, wodurch das frische Gemisch in den Zylinder einströmt und die Verbrennungsgase über den Auslaßkanal nach außen transportiert werden, daß weiterhin bei der Bewegung des Kolbens von dem unteren Totpunkt zum oberen Totpunkt der Auslaßkanal mittels des steuerbaren Regelelements geschlossen wird und daß anschließend die Einlaßkanäle ebenfalls mittels der steuerbaren Regelelemente geschlossen werden.

6. Verfahren nach Anspruch 4 oder 5,
**dadurch gekennzeichnet,**
daß das magere Gemisch kurz vor Erreichen des unteren Totpunktes in den Brennraum gelangt.

7. Verfahren nach einem der Ansprüche 4 bis 6,
**dadurch gekennzeichnet,**
daß das im Zylinderraum befindliche Gemisch mittels des sich vom unteren Totpunkt zum oberen Totpunkt bewegenden Kolbens beschleunigt wird.

8. Verfahren nach einem der Ansprüche 4 bis 7,
**dadurch gekennzeichnet,**
daß das im Zylinderraum befindliche Gemisch mittels des sich vom unteren Totpunkt zum oberen Totpunkt bewegenden Kolbens im Zentrum des Brennraumes gesammelt wird.

## Claims

1. A two-stroke internal combustion engine, encompassing at least one cylinder (10) having a reciprocating piston (20) and a first and a second inlet passage (40) and at least one outlet passage (70), in which the inlet passages(40) are arranged in relation to the exhaust passage (70) on the uniflow scavenging principle, that they open into the cylinder (10) in the region of the combustion chamber (30), and where a regulatable controller (50) is arranged in each of the mouth areas of inlet passages (40) and an injection valve (42a,42b) is arranged in each inlet passage (40),
characterised in that,
the inlet passages (40) open tangentially into the combustion chamber (30), and that a likewise regulatable controller (80) is arranged in the mouth area of outlet passage (70), and that by means of the first injection valve (42a) arranged in the first inlet passage (40) a mixture containing only a little fuel arrives at the combustion chamber (30), and by means of the second injection valve (42b) arranged in the second inlet passage (40) a rich mixture arrives at the combustion chamber (30).

2. A two-stroke internal combustion engine according to claim 1, characterised in that the inlet passages (40) in the cylinder head (12) open into the combustion chamber (30).

3. A two-stroke internal combustion engine according to claims 1 or 2, characterised in that the two inlet passages (40) are arranged symmetrically to the longitudinal axis (L) of the cylinder (10).

4. A process for operating a mixture-forming internal combustion engine, where at least one cylinder having a reciprocating piston and at least two inlet passages are provided, in which each has an injection valve arranged, and having at least one outlet passage, and where further the inlet passages are arranged in relation to the exhaust passage on the uniflow scavenging principle, that the inlet passage opens into the cylinder in the region of the combustion chamber, where in each mouth area of the inlet passages a regulatable controller is provided,
characterised in that the fresh mixture is introduced rotating into the cylinder, that the outlet passage is controlled depending on an operating parameter of the internal combustion engine, in particular the position of the angle of rotation of the crank shaft, that on moving the piston from top dead centre to bottom dead centre by means of the first injection valve arranged in the first inlet passage, a mixture containing only a little fuel arrives in the combustion chamber, and that on moving the piston from bottom dead centre to top dead centre by means of the second injection valve arranged in a second inlet passage, a rich mixture arrives in the combustion chamber.

5. A process according to claim 4, characterised in that the regulatable controller opens the outlet passage with an operating stroke of the piston during its movement from top dead centre to bottom dead centre before attaining bottom dead centre, that furthermore, shortly after that the inlet passages are opened by means of their respective regulatable controller, whereby the fresh mixture flows into the cylinder and the combustion gases are outwardly transported via the outlet passage, that further, on movement of the piston from bottom dead centre to top dead centre, the outlet passage is closed by means of the regulatable controller, and that subsequently the inlet passages are likewise closed by means of the regulatable controller.

6. A process according to claims 4 or 5, characterised in that the lean mixture arrives in the combustion chamber shortly before attaining bottom dead centre.

7. A process according to claims 4 to 6, characterised in that the mixture found in the cylinder area is accelerated by means of the piston movement from bottom dead centre to top dead centre.

8. A process according to claims 4 to 7, characterised in that the mixture found in the cylinder area is collected in the centre of the combustion chamber by means of the piston movement from bottom dead centre to top dead centre.

## Revendications

1. Moteur à combustion interne à deux temps comprenant au moins un cylindre (10), au sein duquel se déplace un piston (20), et équipé d'un premier et d'un deuxième conduit d'admission (40) ainsi que d'au moins un conduit d'échappement (70), moteur dans lequel les conduits d'admission (40) sont agencés par rapport au conduit d'échappement (70) conformément au principe du balayage à équicourants et de telle façon qu'ils aboutissent dans la chambre de combustion (30) du cylindre (10). Y sont prévus un élément régulateur asservi (50) dans chaque bouche des conduits d'admission (40) et une soupape injectrice (42a, 42b) au sein de chaque conduit d'admission (40),
**caractérisé par le fait**
que les conduits d'admission (40) aboutissent tangentiellement dans la chambre de combustion (30) et qu'un élément régulateur asservi (80) est également placé dans la bouche du conduit d'échappement (70), et qu'un mélange à faible teneur de carburant est admis dans la chambre de combustion (30) au moyen de la première soupape injectrice (42a) incorporée au premier conduit d'admission (40) et qu'un mélange riche pénètre dans la chambre de combustion (30) à l'aide de la deuxième soupape injectrice (42b) incorporée au deuxième conduit d'admission (40).

2. Moteur à combustion interne à deux temps selon la revendication 1,
**caractérisé par le fait que**
les conduits d'admission (40) aménagés dans la culasse (12) aboutissent dans la chambre de combustion (30).

3. Moteur à combustion interne à deux temps selon revendication 1 et 2,
**caractérisé par le fait que**
les deux conduits d'admission (40) sont aménagés symmétriquement par rapport à l'axe longitudinal (L) du cylindre (10).

4. Procédé d'exploitation d'un moteur à combustion interne à formation du mélange carburant-air, équipé d'au moins un cylindre, au sein duquel un piston se déplace, et d'au moins deux conduits d'admission, dans chacun desquels est incorporée une soupape injectrice, et équipé d'au moins un conduit d'échappement, tout en mentionnant que les conduits d'admission sont agencés par rapport au conduit d'échappement, conformément au principe du balayage à équicourants, de telle façon qu'ils aboutissent dans la zone de la chambre de combustion du cylindre, tout en mentionnant qu'un élément régulateur est prévu dans la bouche des conduits d'admission,
**caractérisé par le fait que**
le mélange air-carburant est introduit dans le cylindre sous la forme de courants circulaires, que le conduit d'échappement est asservi en fonction d'un paramètre de service du moteur à combustion interne, en particulier en fonction de la position de l'angle de rotation du vilebrequin, qu'au cours du déplacement du piston du point mort haut au point mort bas un mélange à faible teneur de carburant se dégage dans la chambre de combustion à l'aide de la première soupape injectrice incorporée au premier conduit d'admission et que, lors du déplacement du piston du point mort bas au point mort haut un mélange riche pénètre dans la chambre de combustion à l'aide de la deuxième soupape injectrice incorporée au deuxième conduit d'admission.

5. Procédé selon revendication 4,
**caractérisé par le fait que**
l'élément régulateur asservi ouvre le conduit d'échappement au cours d'une course de travail du piston, c-à-d. durant son déplacement du point mort haut au point mort bas, avant que le piston atteigne le point mort bas, qu'en plus peu de temps après les conduits d'admission s'ouvrent sous l'action de leur élément régulateur asservi, opération pendant laquelle le mélange air-carburant pénètre dans le cylindre et les gaz brûlés sont transportés vers l'extérieur à travers le conduit d'échappement, que le conduit d'échappement se ferme sous l'action de l'élément régulateur asservi lors du déplacement du piston du point mort bas au point mort haut et qu'ensuite les conduits d'admission se ferment également sous l'action des éléments régulateurs asservis.

6. Procédé selon revendication 4 ou 5,
**caractérisé par le fait**
que le mélange pauvre est admis dans la chambre de combustion juste avant l'atteinte du point mort bas.

7. Procédé selon l'une des revendications 4 à 6,
**caractérisé par le fait**
que le mélange présent dans la chambre du cylindre est propulsé par le piston se déplaçant du point mort bas au point mort haut.

8. Procédé selon l'une des revendications 4 à 7,
**caractérisé par le fait**
que le mélange présent dans la chambre du cylindre s'accumule au centre de la chambre de combustion sous l'action du piston se déplaçant du point mort bas au point mort haut.
